# EUROPÄISCHE PATENTSCHRIFT

(11) **EP 1 635 362 B1**
(45) Veröffentlichungstag und Bekanntmachung des Hinweises auf die Patenterteilung: **25.03.2009**
(21) Anmeldenummer: 05015436.8
(22) Anmeldetag: 15.07.2005
(51) Int. Cl.: H01C 1/082, H01C 3/02

(54) **Hochleistungswiderstand mit Kühlmedium**
High power resistor with cooling by a streaming medium
Résistance haute performance avec refroidissement par écoulement d'un fluide

(30) Priorität: 09.09.2004 DE 102004048661
(43) Veröffentlichungstag der Anmeldung: 15.03.2006
(73) Patentinhaber: Eldis Ehmki & Schmid OHG, 85716 Unterschleissheim (DE)
(72) Erfinder: Hilligsoe, Torben, Kent CT10 2DX (GB); Pahlke, Gerhard, 85302 Gerolsbach (DE)
(74) Vertreter: Zinnecker, Armin

(56) Entgegenhaltungen:
- DE-A1- 4 008 422
- US-A- 635 719
- US-A- 3 550 058
- US-A- 4 434 417

## Beschreibung

Die Erfindung betrifft einen Hochleistungswiderstand und eine Widerstandseinheit, die aus mehreren derartigen Hochleistungswiderständen besteht.

Hochleistungswiderstände werden insbesondere zum Bremsen von Elektromotoren verwendet, insbesondere in Thyristor-Antrieben, insbesondere Hochfrequenz-Thyristor-Antrieben, aber auch für viele andere Anwendungen auf dem Gebiet der Steuerung und Regelung von elektrischen Antrieben. Hochleistungswiderstände werden insbesondere auch in der Automobiltechnik benötigt.

Bekannte Hochleistungswiderstände umfassen einen Draht aus einem einen elektrischen Widerstand aufweisenden Material, der um einen Kern gewickelt ist, wobei der Kern im Allgemeinen hohe Temperaturen aushalten kann. Es sind auch Hochleistungswiderstände bekannt, die aus einem Spiraldraht bestehen, der nicht um einen Kern gewickelt ist. Der Draht ist mit einer elektrischen Isolierung versehen. Er befindet sich in einem wärmeleitenden Material, das von einem metallischen Gehäuse umgeben ist, das als Wärmetauscher wirkt.

Bei den vorbekannten Hochleistungswiderständen entstehen insbesondere dann Probleme, wenn die Betriebsfrequenz hoch ist, beispielsweise höher als ein kHz, und/oder wenn es wichtig ist, die Wellenform des Stromes beizubehalten. Die Probleme entstehen bei den vorbekannten Leistungswiderständen insbesondere dadurch, daß sie kraft ihrer Konstruktion eine gewisse Kapazität und/oder Induktivität aufweisen, durch die die Form und das Format des Spannungssignals und/oder des Stromsignals, das beispielsweise rechteckig oder sinusförmig sein kann, in unzulässiger Weise beeinträchtigt werden kann.

Ein Hochleistungswiderstand nach dem Oberbegriff des Anspruchs 1 ist aus der US-A-3 550 058 bekannt.

Aufgabe der Erfindung ist es, einen Hochleistungswiderstand zu verbessern.

Erfindungsgemäß wird diese Aufgabe durch die Merkmale des Anspruchs 1 gelöst. Der Hochleistungswiderstand umfaßt ein Gehäuse, das von einem Kühlmedium durchströmbar oder durchströmt ist und in dem mehrere, vorzugsweise drei, flächenförmige Widerstandselemente vorgesehen sind, zwischen denen Separatoren vorgesehen sind. Erfindungsgemäß dienen die Separatoren als Leitvorrichtungen für das Kühlmedium. Das Kühlmedium kann flüssig oder gasförmig sein. Vorzugsweise ist das Kühlmedium flüssig. Die Widerstandselemente können parallel oder in Reihe geschaltet sein. Besonders vorteilhaft ist es, wenn die flächenförmigen Widerstandselemente parallel zueinander angeordnet sind. Durch die Separatoren können die Widerstandselemente voneinander isoliert werden. Eine besonders einfache Lösung wird erreicht, wenn die flächenförmigen Widerstandselemente durch flächenförmige Separatoren voneinander getrennt werden.

Vorteilhafte Weiterbildungen sind in den Unteransprüchen beschrieben.

Eine vorteilhafte Weiterbildung ist dadurch gekennzeichnet, daß das Gehäuse aus Kunststoff, vorzugsweise aus thermoplastischem Kunststoff, besteht. Ein derartiges Gehäuse ist kostengünstig herstellbar.

Vorzugsweise ist an dem Gehäuse ein Anschlußkasten vorgesehen. Der Anschlußkasten kann elektrische Kontakte zum Anschluß von elektrischen Leitungen aufweisen.

Eine weitere vorteilhafte Weiterbildung ist durch abgedichtete Anschlüsse zur Verbindung des Widerstandselements mit dem Anschlußkasten gekennzeichnet.

Die Erfindung betrifft ferner eine Widerstandseinheit, die aus mehreren erfindungsgemäßen Hochleistungswiderständen besteht.

Durch die Erfindung wird ein kühlmedium-gekühlter, insbesondere flüssigkeitsgekühlter Hochleistungswiderstand geschaffen. Sie ermöglicht die Realisierung eines Widerstandes mit hohen Leistungswerten und insbesondere mit einer geringen Impedanz und einer geringen Induktion. Der Hochleistungswiderstand kann mit besonderem Vorteil beim Bremsen von elektrischen Motoren, insbesondere in Hochfrequenz-Thyristor-Antrieben, verwendet werden, aber auch in vielen anderen Anwendungen auf dem Gebiet der elektrischen Antriebstechnik, insbesondere der Steuerung und Regelung von elektrischen Antrieben. Ein weiteres bedeutsames Anwendungsfeld ist die Automobiltechnik.

Insbesondere in Anwendungsgebieten, in denen es auf ein geringes Gewicht und/oder eine hohe Packungsdichte der elektrischen und/oder elektronischen Komponenten ankommt, insbesondere in der Automobilindustrie, wird eine möglichst hohe Leistungsdisipation angestrebt. Dies ist insbesondere bei starken Bremsvorgängen erforderlich. Zur gleichen Zeit soll der benötigte Platz gering gehalten werden. Die Erfindung ermöglicht es, diese Probleme zu lösen.

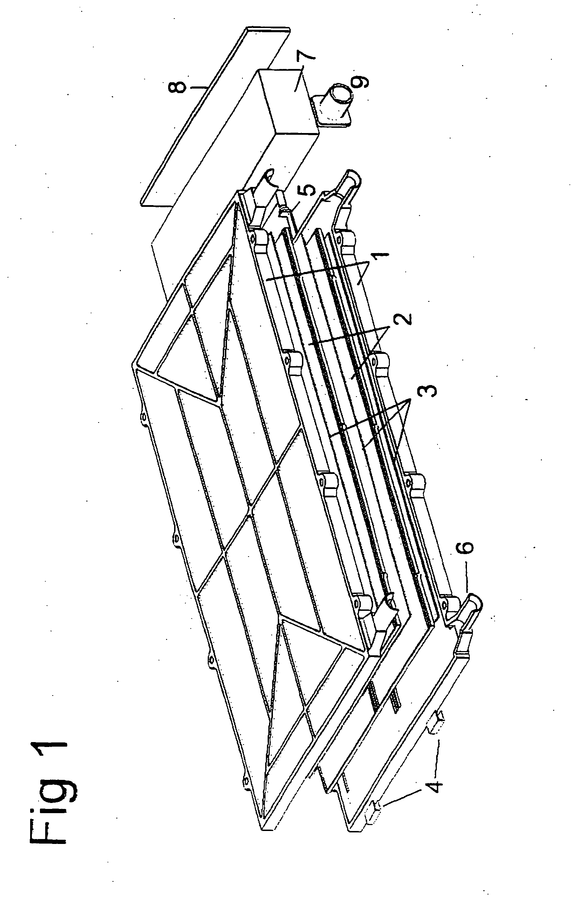

Ausführungsbeispiele der Erfindung werden nachstehend anhand der beigefügten Zeichnung im einzelnen erläutert. In der Zeichnung zeigt
- Fig. 1: einen Hochleistungswiderstand in einer perspektivischen Explosionsansicht,

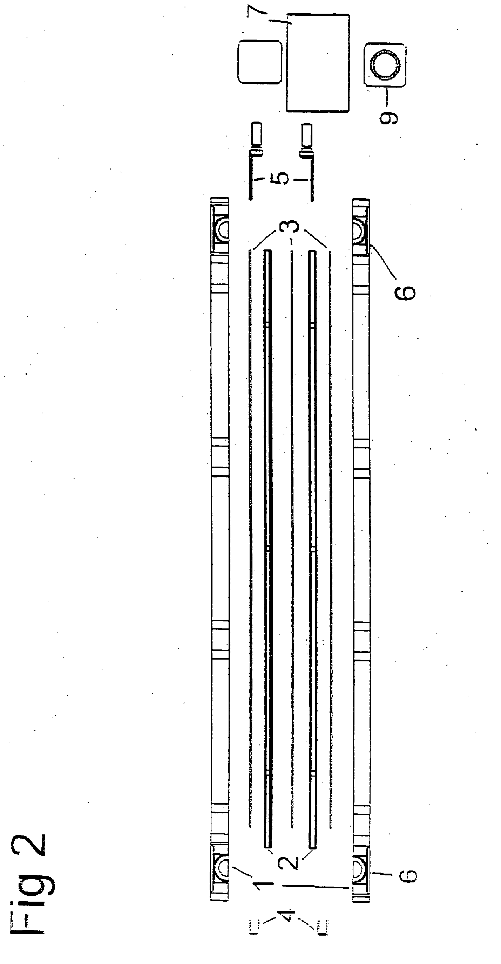

- Fig. 2: den Hochleistungswiderstand gemäß Fig. 1 in einer Seitenansicht,

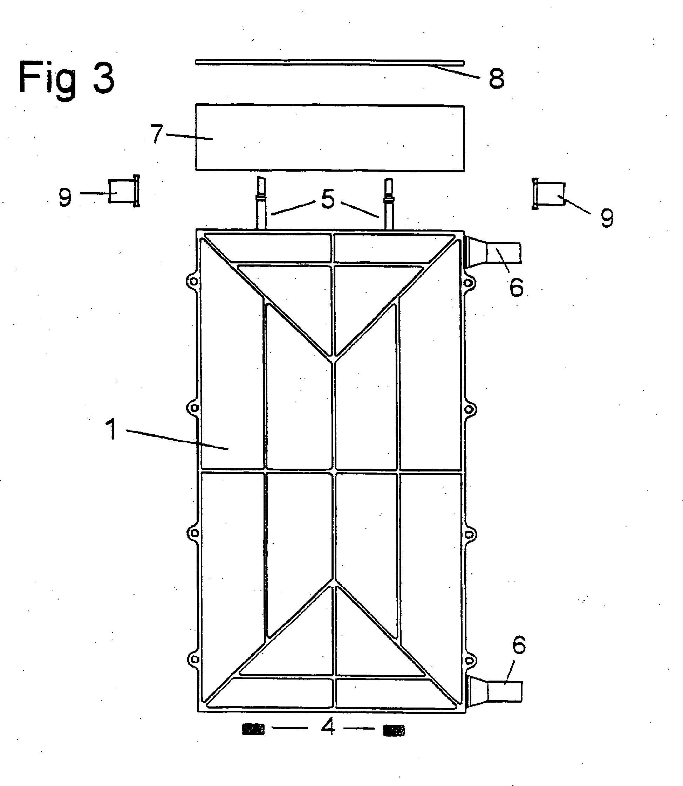

- Fig. 3: den Hochleistungswiderstand gemäß Fig. 1 und 2 in einer Ansicht von oben,

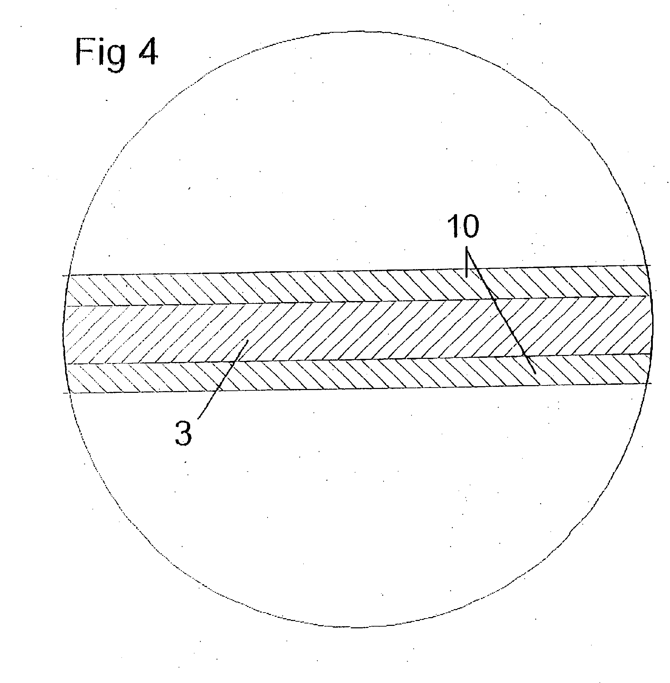

- Fig. 4: einen Schnitt durch ein Widerstandselement des Hochleistungswiderstands gemäß Fig. 1 bis 3,
- Fig. 5: den Hochleistungswiderstand gemäß Fig. 1 bis 3 in zusammengebautem Zustand in einer perspektivischen Ansicht und
- Fig. 6: eine Widerstandseinheit, die aus vier Hochleistungswiderständen gemäß Fig. 1 bis 3 und 5 besteht.

Der in den Zeichnungsfiguren dargestellte Hochleistungswiderstand umfaßt ein Gehäuse, das aus einem oberen Gehäuseteil 1 und einem unteren Gehäuseteil 1 besteht. Die Gehäuseteile 1 sind Formteile aus thermoplastischem Kunststoff. Sie sind miteinander verklebt und bilden ein geschlossenes, druckfestes, abgedichtetes Gehäuse. Als Kunststoffmaterial ist beispielsweise Nylon 6.6 oder Nylon 4.6 mit 30% Nylon und 40% Glasfüllung geeignet, wie es standardmäßig in der Automobilindustrie verwendet wird, aber auch andere Kunststoffmaterialien.

In dem Gehäuse sind drei Widerstandselemente 3 angeordnet. Die Widerstandselemente 3 sind flächenförmig ausgestaltet. Sie verlaufen parallel zueinander und im Abstand voneinander. Die Widerstandselemente 3 weisen eine Rechteckform auf, wobei das Rechteck etwas kleiner ist als das von den Gehäuseteilen 1 gebildete Rechteck.

Die Widerstandselemente 3 werden durch zwei Separatoren 2 voneinander getrennt. Die Separatoren 2 sind ebenfalls flächenförmig. Sie weisen eine rechteckige Form auf, die etwas größer ist als die Rechtecke der Widerstandselemente 3 und etwas kleiner als die Rechtecke der Gehäuseteile 1. Die Separatoren 3 sind aus thermoplastischem Kunststoff. Für die Separatoren 2 sind dieselben Materialien geeignet wie für die Gehäuseteile 1. Die Separatoren 3 können aus demselben Material gefertigt sein wie die Gehäuseteile 1.

Im zusammengebauten Zustand sind mit den Gehäuseteilen 1 Anschlüsse 6, nämlich Schlauchanschlüsse, verbunden. Die Anschlüsse 6 befinden sich an den Enden einer Längsseite der Gehäuseteile 1. Einer der Anschlüsse 6 dient als Zuleitung für ein Kühlmedium, der andere als Ableitung für das Kühlmedium. Bei dem Kühlmedium handelt es sich um Wasser oder eine Wasser-Glykol-Mischung oder Öl. Auch andere Kühlmedien sind geeignet. Das flüssige Kühlmedium durchströmt das Gehäuse 1. Es kühlt dabei die sich durch die Wirkung des elektrischen Stroms erhitzenden Widerstandselemente 3. Die Teile 1 des Gehäuses sind dichtend und druckdicht miteinander verbunden, so daß kein Kühlmittel austreten kann. Die Separatoren 2 leiten das Kühlmedium an den Widerstandselementen 3 vorbei durch das Gehäuse 1. Sie bewirken eine gleichmäßige Verteilung des Kühlmediums und eine gleichmäßige Kühlung der Widerstandselemente 3.

Wenn die Widerstandselemente 3 in Serie geschalten werden sollen, werden sie mit einem Verbindungsmaterial 4 versehen, die U-förmig ausgestaltet sind und die mit jeweils einem Widerstandselement 3 verschweißt werden. Die Verbindungsmaterialien 4 werden dann durch eine elektrische Leitung miteinander verbunden (in der Zeichnung nicht dargestellt).

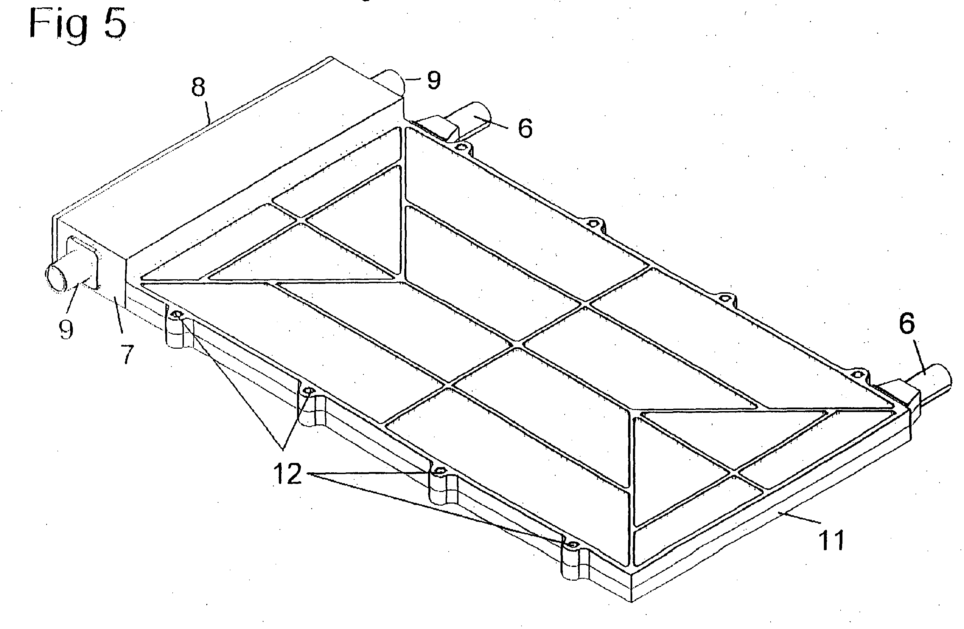

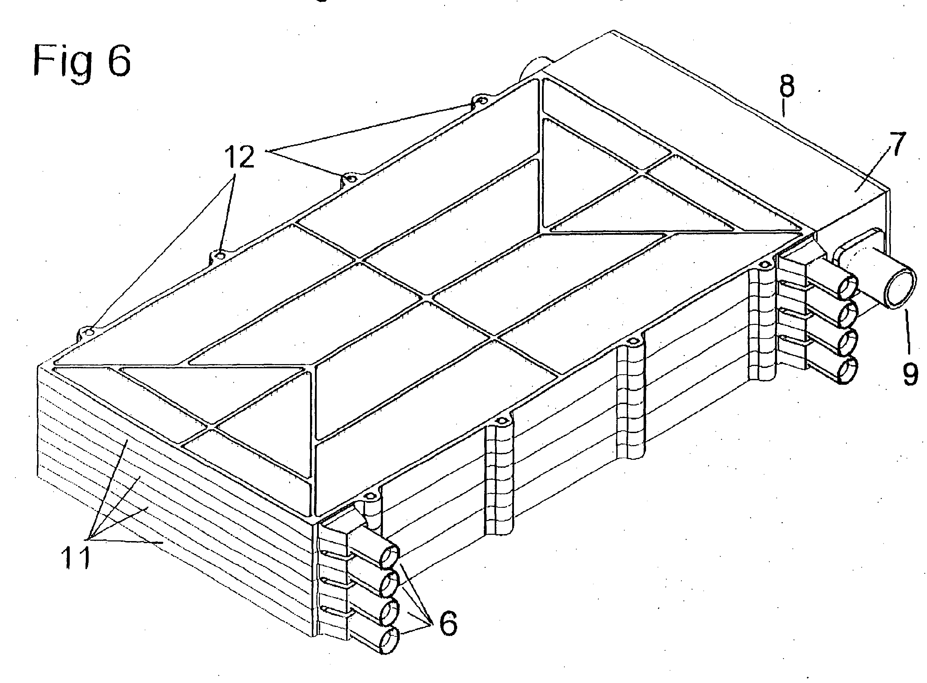

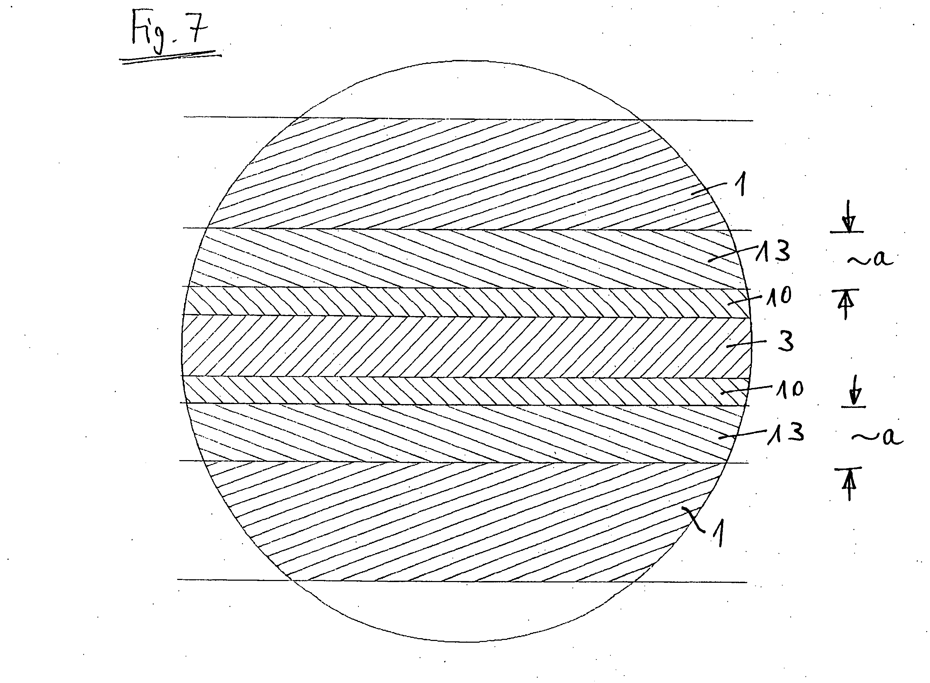

An dem Gehäuse 1 ist ein Anschlußkasten 7 vorgesehen, der sich an einer Schmalseite des rechteckigen Gehäuses 1 befindet und dessen Länge mit der Länge dieser Schmalseite übereinstimmt. Der Anschlußkasten 7 hat einen rechtekkigen Querschnitt, wobei seine Höhe mit derjenigen des Gehäuses 1 übereinstimmt. Die Höhe des Anschlußkastens 7 kann allerdings auch ein Vielfaches der Höhe des Gehäuses betragten, beispielsweise das Doppelte (Fig. 5) oder das Vierfache (Fig. 6).

In der dem Gehäuse 1 zugewandten Seite des Anschlußkastens 7 sind Öffnungen vorgesehen, in die Verbindungsstifte 5 einsteckbar sind. Die Verbindungsstifte 5 weisen in ihrer Mitte O-Ringe auf, die zwischen der dem Gehäuse 1 zugewandten Wand des Anschlußkastens 7 und einem Absatz in den Verbindungsstiften 5 eingeklemmt sind und die eine Abdichtung gegenüber dem Gehäuse 1 bewirken. Die Verbindungsstifte 5 weisen ferner Zungen auf, die in das Gehäuse 1 hineinragen und die mit jeweils einem oder mehreren Widerstandselementen 3 elektrisch leitend verbunden sind.

In dem Anschlußkasten 7 sind elektrisch leitende Verbindungen vorhanden (in der Zeichnung nicht dargestellt), die die in den Anschlußkasten 7 hineinragenden Teile der Anschlußstifte 5 mit Kontakten 9 elektrisch leitend verbinden. Die Kontakte 9 sind an den Enden des Anschlußkastens 7 vorgesehen. Sie bilden Buchsen für daran anzubringende Stecker der elektrischen Anschlußleitungen für das Widerstandselement. Der Anschlußkasten 7 wird durch die Abdeckung 8 geschlossen. Durch eine Entfernung der Abdeckung 8 ist das Innere des Anschlußkastens 7 zugänglich. In dem Anschlußkasten 7 sind Teile vorhanden, die die notwendige Verbindung zwischen den Widerstandselementen, die in Reihe oder parallel geschaltet sein können, und den Kontakten 9 herstellen (in der Zeichnung nicht dargestellt).

Fig. 6 zeigt eine Widerstandseinheit, die aus vier Hochleistungswiderständen 11 besteht. An den Längsseiten der Widerstandselemente 11 sind jeweils vier beabstandete, nach außen weisende Vorsprünge vorhanden, in denen sich Löcher befinden, die jeweils miteinander fluchten und durch die Befestigungsteile, beispielsweise Befestigungsschrauben oder Befestigungsbolzen, hindurchgesteckt werden können.

Durch die Verwendung von Kunststoff, insbesondere thermoplastischem Kunststoff, kann das Gewicht der Hochleistungswiderstände erheblich vermindert werden. Auch die Form und die Struktur ist für viele Anwendungsfälle besser geeignet, insbesondere in der Automobilindustrie. Die Verwendung eines Kühlmediums, insbesondere eines flüssigen Kühlmediums, bewirkt eine hohe Wirksamkeit des Wärmeübergangs zwischen dem oder den Widerstandselementen und dem insbesondere flüssigen Kühlmedium.

Das Widerstandselement kann aus einem großen flachen Streifen eines geeigneten Widerstandsmaterials gefertigt sein, beispielsweise aus Aluchrom, Nickel-Chrom oder anderen geeigneten Materialien. Es kann auf einfache Weise derart geformt werden, daß der gewünschte Widerstandswert und der gewünschte Leistungswert erreicht werden. Als Material eignen sich insbesondere Aluchrom vom Typ Yhf, Y und ISE, Nickelchrom 80/20, 70/30 und 30/20, aber auch andere Materialien. Die Dicke des Materials hängt von der gewünschten Leistungsverteilung und dem gewünschten Strom ab; sie beträgt im Allgemeinen 0,25 bis 0,5mm, wobei allerdings auch geringere oder höhere Werte möglich sind. Die Größe der Widerstandselemente kann bis zu 400mm × 250mm betragen und in besonderen Fällen auch noch größer sein.

Das Material der Gehäuseteile 1 und der Separatoren 2 wird nach den Anforderungen ausgewählt, insbesondere nach der Art des insbesondere flüssigen Kühlmediums. Besonders geeignet sind wärmeleitende Kunststoffe, insbesondere Kunstharze, die eine konstante und genaue elektrische und thermische Isolierung bewirken. Geeignet sind insbesondere Protavic, L112-2, L135, L163 oder L181, aber auch andere Materialien.

## Patentansprüche

1. Hochleistungswiderstand mit einem Gehäuse (1), das von einem Kühlmedium durchströmbar oder durchströmt ist und in dem mehrere flächenförmige Widerstandselemente (3) vorgesehen sind, zwischen denen Separatoren (2) vorgesehen sind,
**dadurch gekennzeichnet,**
**daß** die Separatoren (2) als Leitvorrichtungen für das Kühlmedium dienen.

2. Hochleistungswiderstand nach Anspruch 1, **dadurch gekennzeichnet, daß** das Gehäuse (1) aus Kunststoff, vorzugsweise aus thermoplastischem Kunststoff, besteht.

3. Hochleistungswiderstand nach einem der vorhergehenden Ansprüche, **dadurch gekennzeichnet, daß** an dem Gehäuse (1) Anschlüsse (6) für die Zuleitung und die Ableitung des Kühlmediums vorgesehen sind.

4. Hochleistungswiderstand nach einem der vorhergehenden Ansprüche, **dadurch gekennzeichnet, daß** an dem Gehäuse (1) ein Anschlußkasten (7) vorgesehen ist.

5. Hochleistungswiderstand nach Anspruch 4, **gekennzeichnet durch** abgedichtete Anschlüsse (5) zur Verbindung des Widerstandselements (3) mit dem Anschlußkasten (7).

6. Widerstandseinheit, bestehend aus mehreren Hochleistungswiderständen (11) nach einem der Ansprüche 1 bis 5.

## Claims

1. High-power resistor having a housing (1) through which a cooling medium can flow or flows and in which a plurality of uniplanar resistance elements (3) are provided, between which separators (2) are provided,
**characterized**
**in that** the separators (2) are used as guide apparatuses for the cooling medium.

2. High-power resistor according to Claim 1, **characterized in that** the housing (1) is composed of plastic, preferably thermoplastic.

3. High-power resistor according to one of the preceding claims, **characterized in that** connections (6) for the input line and the output line of the cooling medium are provided on the housing (1).

4. High-power resistor according to one of the preceding claims, **characterized in that** a connecting box (7) is provided on the housing (1).

5. High-power resistor according to Claim 4, **characterized by** sealed connections (5) for connection of the resistance element (3) to the connecting box (7).

6. Resistance unit, comprising a plurality of high-power resistors (11) according to one of Claims 1 to 5.

## Revendications

1. Résistance haute performance avec un boîtier (1), pouvant être traversé ou étant traversé par un milieu de refroidissement et dans lequel sont prévus plusieurs éléments de résistance planiformes (3) entre lesquels sont prévus des séparateurs (2),
**caractérisée**
**en ce que** les séparateurs (2) servent de dispositifs de guidage au milieu de refroidissement.

2. Résistance haute performance selon la revendication 1, **caractérisée en ce que** le boîtier (1) consiste en matériau synthétique, de préférence en matériau synthétique thermoplastique.

3. Résistance haute performance selon l'une des revendications précédentes, **caractérisée en ce que** sont prévus au boîtier (1) des raccords (6) pour l'amenée et l'évacuation du milieu de refroidissement.

4. Résistance haute performance selon l'une des revendications précédentes, **caractérisée en ce qu'**une boîte de raccordement (7) est prévue au boîtier (1).

5. Résistance haute performance selon la revendication 4, **caractérisée par** des raccords rendus étanches (5) pour relier l'élément de résistance (3) à la boîte de raccordement (7).

6. Unité de résistance, constituée de plusieurs résistances haute performance (11) selon l'une des revendications 1 à 5.
